Europäisches Patentamt

European Patent Office

Office européen des brevets

(11) Publication number: **0 157 791**
**B1**

(12) **EUROPEAN PATENT SPECIFICATION**

(45) Date of publication of patent specification: **14.06.89**

(21) Application number: **84903182.8**

(22) Date of filing: **29.08.84**

(86) International application number:
**PCT/GB84/00297**

(87) International publication number:
**WO 85/01175 14.03.85 Gazette 85/07**

(51) Int. Cl.⁴: **H 04 N 5/74,** H 04 N 9/31,
G 02 F 1/11

(54) **DISPLAY SYSTEM.**

(30) Priority: **31.08.83 GB 8323316**

(43) Date of publication of application:
**16.10.85 Bulletin 85/42**

(45) Publication of the grant of the patent:
**14.06.89 Bulletin 89/24**

(84) Designated Contracting States:
**BE CH DE FR GB LI NL SE**

(56) References cited:
**US-A-3 818 129
US-A-4 084 182**

**Review of the Electrical Communication
Laboratories, vol. 20, no. 5,6 May-June 1972,
Tokyo (JP), Y. Ohmachi et al.: "Acoustic and
acousto-optical properties of TeO2 single
crystal", pp. 529-541**

(73) Proprietor: **PRUTEC LIMITED
142 Holborn Bars
London EC1N 2NH (GB)**

(72) Inventor: **FERNIE, Douglas, Petrie
5 Pigeons Close
Thriplow Cambs. (GB)**
Inventor: **PETTIGREW, Robert, Martin
Pound Cottage
Foxton Cambs. (GB)**
Inventor: **SAWYERS, Craig, George
196 Icknield Way
Letchworth Herts (GB)**

(74) Representative: **Messulam, Alec Moses
A. Messulam & Co. 24 Broadway
Leigh on Sea Essex SS9 1BN (GB)**

Courier Press, Leamington Spa, England.

## Description

### Field of the invention

This invention relates in general to a display system for projecting information, such as carried on a video input signal, onto a screen for visual observation. More particularly, the invention concerns a display system for displaying information wherein a light source is employed to illuminate an acousto-optic cell activated with an input signal which transmits through the cell sound waves of amplitude representative of the information to be displayed, thereby to modulate the incident light, and the modulated light is imaged to form the display.

### Background to the invention

A system capable of projecting television signals onto a viewing screen using an acousto-optic light valve was developed in the 1930s by Scophony Laboratories Limited of London and has been well published in the technical literature. This system comprised three sub-units: (i) a compact, high-brightness arc lamp whose output was collimated by a condenser lens and which illuminated (ii) an acousto-optic light valve. The latter comprised a water filled cell with a piezoelectric transducer at one end and an acoustic absorber at the other. Television signals were imposed on a suitable carrier frequency and launched into the cell via the transducer at as a spatially modulated sequence of compressions and rarefactions which diffracted the incident light by Bragg diffraction to a greater or lesser degree. This cell was imaged through an aperture which provided contrast by selecting either zero or first order transmission and subsequently projected onto a screen via (iii) an image immobilising polygon which rotated at such a speed as to track each picture element moving through the cell in such a fashion as to immobilise it on the projection screen.

Subsequent modifications to the Scophony system have been made over the years using crystalline acousto-optic materials and continuous wave laser illumination to improve the brightness and resolution of the displayed image.

In US-A-3 818 129, a development is described which involves substituting for the continuous laser a pulsed laser which serves also to immobilise the image. The laser in the latter patent is a Q-switched ultraviolet laser and means are provided for converting the light to visible light. Q-switching places a limitation on the frequency of the output light pulses and precludes the use of such lasers from large screen projection of television broadcasts.

The present invention seeks to provide a display system which mitigates the above disadvantages and permits the large screen projection of a video signal derived from a television broadcast.

According to the present invention, there is provided a display system for displaying information wherein a light source is employed to illuminate an acousto-optic cell activated with an input signal which transmits through the cell sound waves of amplitude representative of the information to be displayed, thereby to modulate the incident light, and the modulated light is imaged to form the display, characterised in that the acousto-optic cell is a crystalline tellurium dioxide ($TeO_2$) cell into which the sound waves are launched along the direction of the slow shear axis by means of a transducer fed with an electrical input signal carrying the display information, said input signal having a bandwidth not exceeding 30 MHz and a carrier frequency less than 75 MHz, and in that the light source comprises a naturally pulsed laser pulsed to produce a sequence of laser light pulses of the wavelength to be displayed which are spatially modulated in accordance with the information to be displayed.

A serious consideration in the design of a projection system using a pulsed laser is the size of the optics. The material selected for the acousto-optical cell is of paramount importance as the size of the cell and the optical system decreases as the speed of sound in the cell decreases. Though the properties of tellurium dioxide, along with many other acousto-optical materials are known (see for example Review of the Electrical Communication Laboratories, Vol. 20, Nos. 5, 6 May-June 1972, Tokyo (JP)), the selection of this material and the mode of sound propagation is an important feature of the present invention.

Tellurium dioxide exhibits a particularly low speed of sound along one axis, this being referred to above as the "slow shear" mode. Tellurium dioxide operating in the slow shear mode has a speed of sound of only 617 metre per second. This means that if the information to be displayed is carried on a video signal typically having (in the U.K.) a line duration of 64 micro seconds of which about 52 micro seconds carried useful information, the cell can be small as 32 mm.

The laser is preferably based on gold, copper and strontium vapours, giving pulsed visible outputs at 628 nm in the red (gold laser), 510 nm (blue/green) and 578 nm (yellow) for the copper vapour laser and 430 nm for the strontium vapour laser. Other naturally pulsed lasers, capable of operation at the video line rate, can alternatively be used. The wavelength of operation may be outside the visible region e.g. for displays viewed by thermal sensors.

By virtue of the use of a naturally pulsed laser and the selection of tellurium dioxide operating in the slow shear mode for the acousto-optical cell, the invention enables the input signal to be a video signal at video line frequency, which is 15.625 KHz in the U.K. The laser is preferably synchronised directly from the input signal, and the duration of the laser pulses is preferably small so that no appreciable smearing of video information occurs. For example, for a video bandwidth of 5.5 MHz which is common in the U.K., the number of resolution elements along the video line is approximately 300. In addition the active length of the line in time is approximately 60 micro seconds. The time associated with a given resolution element is therefore 200 nano seconds. In order, therefore, to freeze the video line in the acousto-optic cell the laser pulse duration should be well below this figure of 200 nano seconds to avoid appreciable coalition of adjacent picture elements. A pulse duration below 50 nano seconds has been found to be suitable.

After the laser light has been spatially modulated it is projected onto the display means using appropriate optical elements. To form a two-dimensional display each video line is scanned vertically using a frame scanner which may consist of a rotating or oscillating mirror whose movement is synchronised by means of the video input signal. In order to generate the modulated video display, the laser light is focussed through one of two small orifices which serve to pass either zero order (undiffracted) light or first order diffracted light. The image under first order illumination relative to zero order illumination is in inverse video, i.e. of complementary brightness.

In the preferred embodiment of the invention outlined below, the need to immobilise the image via a highspeed, counter-rotating polygon is eliminated by using a high brightness pulsed laser illuminator whose pulse width is so low as to "freeze" the moving information in the acousto-optic cell. In addition, the latter cell has been constructed out of crystalline tellurium dioxide (TeO$_2$) into which a shear wave has been launched in the (110) direction, this having an extremely low acoustic velocity and a high acousto-optic efficiency. A consequence of using the TeO$_2$ in this mode is that the crystal size required to accommodate one TV line is much smaller than for water or any other crystalline material presently known, leading to substantial cost reductions. Furthermore, by using high brightness lasers which are naturally pulsed in synchronism with the input signals as opposed to lasers which ordinarily operate in a continuous fashion with external means to pulse them, adequate light throughout is obtained for screen illumination during the very short pulse required to "freeze" the information in the cell.

A colour display may be provided by the use of a pulsed laser providing a dual wavelength output from which the individual wavelength components are separated by a separator upstream of at least one acousto-optic cell fed with an electrical input signal based on differing centre carrier frequencies. In one embodiment of colour system, two acousto-optic cells respectively receive the two wavelength components emergent from the separator, the cells are individually activated by input signals based on differing centre carrier frequencies optimised for the two wavelengths, and the modulated light beams emergent from the cells are combined at a beam combiner. In another embodiment, a single acousto-optic cell receives the two wavelength components emergent from the separator at slightly differing angles of incidence, and the cell is activated by an input signal which comprises the sum of two modulated carriers based on the differing centre carrier frequencies. In both embodiments, the input signal(s) can comprise a linear combination of RGB colour signals.

Description of drawings

A laser display system according to the invention will now be described, by way of example, with reference to the accompanying drawings, in which:-

Figure 1 shows a basic system in diagrammatic form;

Figure 2 shows a modification giving a colour display; and

Figure 3 shows another modification giving a colour display.

Detailed description of the drawings

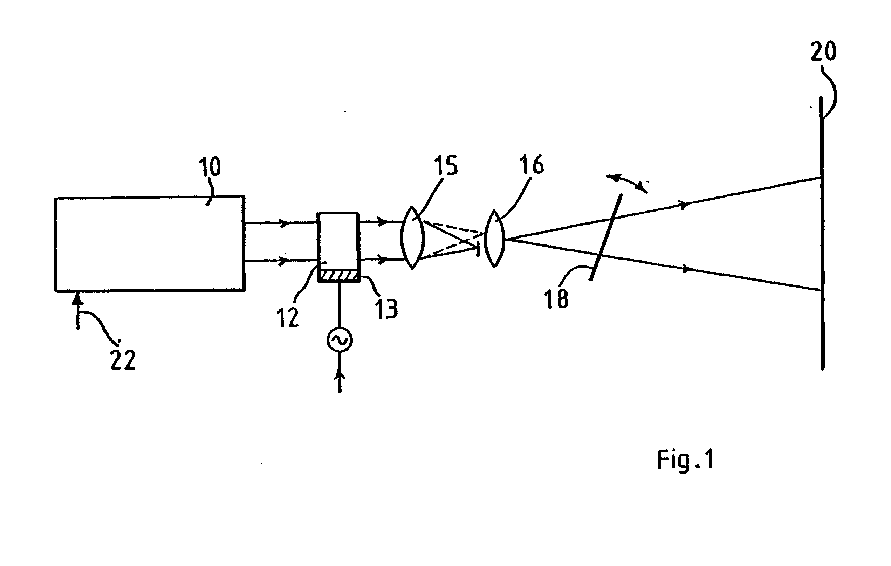

The system of Figure 1 comprises a pulsed laser 10 which operates by pulsed excitation with an output in the visible part of the spectrum (400-700 nm). The pulses of laser light are fed to an acousto-optic modulator cell 12, (sometimes called a Bragg cell), fabricated out of crystalline tellurium dioxide. The cell 12 is energised, through a piezoelectric transducer 13, by an electrical signal carrying video information at the video line frequency. The cell 12 is arranged so that the acoustic waves derived from the video input signal are launched into the tellurium dioxide in a direction along which the speed of sound is particularly low, this mode of operation being called the slow shear mode. The cell 12 need only be about 32mm long to accommodate a duration of 52 micro seconds for which each line carries information.

The pulses produced by the laser 10 have a pulse duration of less than 50 nano seconds, and each pulse is produced just as the information in one video line fills up the cell 12. The pulse illuminates the whole cell and the light is spatially modulated along the length of the cell in dependence upon the video information in the line. This technique therefore, in effect, "freezes" the information in each video line and allows the laser pulse leaving the cell 12 to convey the information in the video line.

The spatially modulated pulses of laser light are fed through an optical system comprising, in this embodiment, a field lens 15 and a projection lens 16 and thence onto a frame scanning mirror 18 which rotates about an axis transverse to the plane of the drawing in synchronism with the video input signal applied to the cell 12. Other embodiments may use alternative optical systems for image projection, which are known to those skilled in the art. The spatially modulated laser light pulses are projected onto a screen 20 which therefore displays an image of the information carried by the video signal. The frame scanning mirror 18 rotates or oscillates in order to project each line onto the appropriate part of the screen, to form a complete display.

The laser 10 is pulsed in synchronism with the video input signal by means of the video line synchronising signal applied to the laser, as shown at 22 in the drawing.

The video bandwidth is typically less than 10 MHz, but it is envisaged that bandwidths up to 30 MHz might in the future be used, subject to international agreements. The carrier frequency of the video signal is typically less than 75 MHz because of the relatively high attenuation of tellurium dioxide in the slow shear mode.

It is possible by using suitable sources of primary colours to produce a full colour display covering all shades and hues in the visible spectrum.

By increasing the repetition rate of the laser pulses and/or reducing the pulse duration it is possible to accommodate video bandwidths much higher than those used e.g. in standard television thereby offering significantly higher image resolution than that medium.

By using a multiplicity of Bragg cells in parallel i.e. one "line" on top of another, the requirement to pulse the laser at the video line rate is reduced by a factor equal to the total number of parallel lines. A limiting case of this is a modulator system consisting of N "line" modulators as described above where N is the number of lines in the display. Such a system requires a pulse repetition frequency equal to the video "frame" rate and dispenses with the need for a frame scanner.

For a full-colour video display system using additive colour mixing it is desirable to use a separate acousto-optic cell for each primary colour channel.

Alternatively, however, a display which gives the impression of full colour can be produced using only two colours by utilising a modification of the Land theory of colour reproduction, as for example described in Proc. NAS, Vol. 45 (1959) at page 115 et seq.

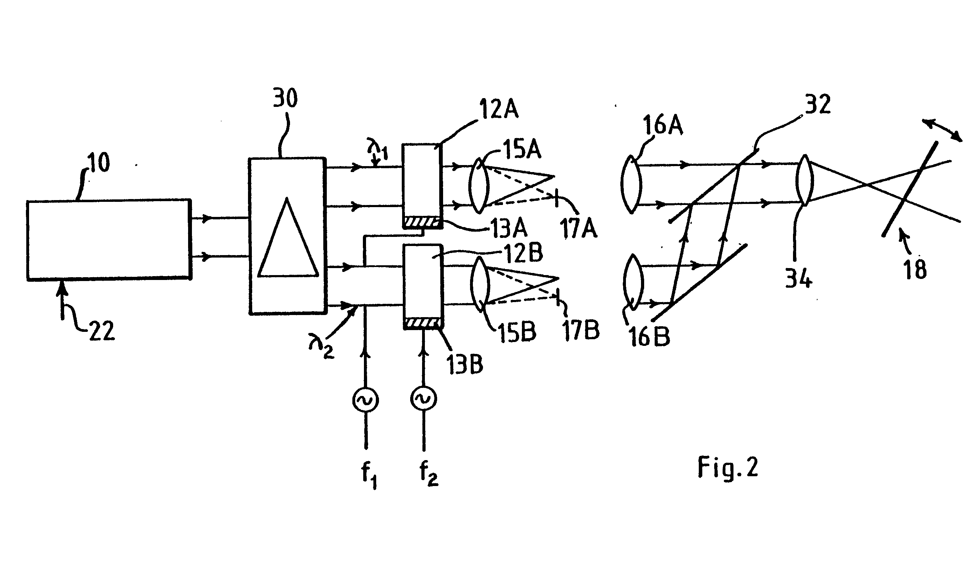

Thus, referring to Figure 2, a copper vapour laser 10 is pulsed in the manner previously described with reference to Figure 1, and outputs a sequence of light pulses at two frequencies, $\lambda_1$, $\lambda_2$, namely 510 nm (blue/green) and 578 nm (yellow/orange). These colours are separated by a dispersive element 30, and the separated colours are respectively incident on two acousto-optic cells 12A, 12B. These cells are activated, via respective piezo-electric transducers 13A, 13B, by information bearing video input signals, in analogous manner to the system of Figure 1. In this instance, however, the information carried by the input signals is a linear combination of the RGB signals conventionally used in three colour displays (colour difference signals). The two acousto-optic cells 12A, 12B are optimised for the two wavelengths of the light pulses produced by the laser 10, and to this end are activated by input signals based on differing carrier centre frequencies $f_1$, $f_2$.

The Schlieren stops 17A, 17B, and associated optics 15A, 15B, 16A, 16B are employed, as before, to remove zero or first orders from the two modulated, pulsed beams emergent from the cells 12A, 12B, and the modulated, pulsed beams are re-combined using an image combiner 32 such as a dichroic mirror, thence being projected via a projection lens 34 and the scanning mirror 18.

The system of Figure 2 gives an acceptable colour display on the display screen.

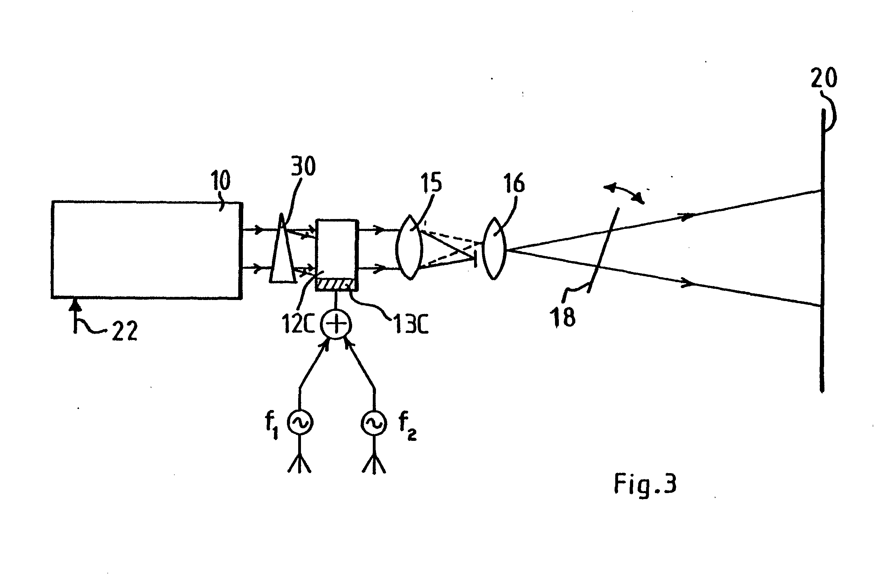

The alternative modification shown in Figure 3 for producing a colour display may be employed in some circumstances. It has the advantage of using only a single acousto-optic cell 12C, but demands tight control of the operating parameters which will not always be feasible.

The single cell 12C receives pulsed light from a copper vapour laser 10, after angular separation of the colour components by a colour separator 30. The cell 12C is activated via piezo-electric transducer 13C, which is driven by the sum of the respective input signals $f_1$ and $f_2$. It is necessary to use a colour separating prism 30 which is sufficiently dispersive to produce a small divergence in the angles of incidence on the cell 12C of the respective colour wavelengths, in order to ensure that one colour is modulated with the informtion (colour signal) carried by the carrier signal of base frequency $f_1$ and the other colour is modulated with the information (colour signal) carried by the carrier signal of base frequency $f_2$. The pulsed beam exiting from the cell is a collinear superimposition of the two, individually modulated, spectral components of the pulsed incident light, and the optics downstream of the cell 12C is analogous to that described with reference to Figure 1.

The system described with reference to Figure 3 is also capable of producing a fully acceptable colour display.

Present medium and large scale projection display systems are based on the relatively inefficient use of compact arc lamps. The described systems offer the benefits of:

lower system cost
compactness/mobility
ease of maintenance/operation
lower running costs
higher resolution
higher brightness
possibility of full colour display.

The following are examples of applications for the invention:

stadium display
conference/seminar display
public display
advertising, billboards
graphics display
video display
training simulators
teleconferencing
leisure/cinema.

## Claims

1. A display system for displaying information wherein a light source is employed to illuminate an acousto-optic cell activated with an input signal which transmits through the cell sound waves of amplitude representative of the information to be displayed, thereby to modulate the incident light, and the modulated light is imaged to form the display, characterised in that the acousto-optic cell (23) is a crystalline tellurium dioxide (TeO₂) cell into which the sound waves are launched along the direction of the slow shear axis by means of a transducer (13) fed with an electrical input signal carrying the display information, said input signal having a bandwidth not exceeding 30 MHz and a carrier frequency less than 75 MHz, and in that the light source comprises a naturally pulsed laser (10) pulsed to produce a sequence of laser light pulses of the wavelength to be displayed which are spatially modulated in accordance with the information to be displayed.

2. A display system according to Claim 1, characterised in that the laser light source (10) is pulsed in synchronism with the input signal so that successive streams of information carried by said input signal are sequentially imaged.

3. A display system according to claim 2, characterised in that the laser (10) is synchronised directly from the input signal.

4. A display system according to claim 2 or claim 3, characterised in that the duration of the laser pulses is sufficiently short that no smearing of information occurs.

5. A display system according to claim 4, characterised in that each successive stream of information comprises a video line with a number of resolution elements in the range 200 to 400.

6. A display system according to claim 5, characterised in that the active length of the video line in time is approximately 60 microseconds.

7. A display system according to claim 4 or claim 5 or claim 6, characterised in that the laser pulse duration is below 50 nano seconds.

8. A display system according to any of claims 1 to 7, characterised by optical display means (15, 16, 18) for imaging the modulated light pulses.

9. A display system according to claim 8, characterised in that the display means includes a frame scanner (18) for vertical scanning of the successive video lines.

10. A display system according to claim 9, characterised in that the frame scanner comprises a rotating or oscillating mirror (18) synchronised by the input signal to enable a two-dimensional display.

11. A display system according to claim 8 or claim 9 or claim 10, characterised in that a modulated video display is generated by focussing the laser light through one of two small orifices which serve to pass either zero order (undiffracted) light or first order (diffracted) light.

12. A display system according to claim 11, characterised in that the first order light relative to zero order light is in inverse video, i.e. of complementary brightness.

13. A display system according to any of claims 1 to 12, characterised in that the laser (10) is based on gold, copper and strontium vapours, giving pulsed visible outputs at 628 nm (red) for the gold vapour laser, at 510 nm (blue/green) and 578 nm (yellow/orange) for the copper vapour laser and at 430 nm for the strontium vapour laser.

14. A display system according to any of claims 1 to 12, wherein the wavelength of operation is outside the visible region and lies in the infrared.

15. A display system according to any of claims 1 to 14, characterised in that a colour display is provided by the use of a pulsed laser (10) providing a dual wavelength output from which the individual wavelength components are separated by a separator (30) upstream of at least one acousto-optic cell fed with an electrical input signal based on differing centre carrier frequencies.

16. A display system according to claim 15, characterised in that two acousto-optic cells (12A, 12B) respectively receive the two wavelength components emergent from the separator (30), in that the cells are individually activated by input signals based on differing centre carrier frequencies optimised for the two wavelengths, and in that the modulated light beams emergent from the cells are combined at a beam combiner (32).

17. A display system according to claim 15, characterised in that a single acousto-optic cell (12C) receives the two wavelength components emergent from the separator (30) at slightly differing angles of incidence, and in that the cell is activated by an input signal which comprises the sum of two modulated carriers based on the differing centre carrier frequencies.

18. A display system according to claim 16 or claim 17, characterised in that the input signal(s) comprise a linear combination of RGB colour signals.

**Patentansprüche**

1. Anzeigesystem zur Anzeige von Informationen, wobei eine Lichtquelle dazu dient, eine akusto-optische Zelle zu beleuchten, die mit einem Eingangssignal aktiviert wird, das durch die Zelle Schallwellen mit einer die anzuzeigende Information darstellenden Höhe überträgt, um damit das einfallende Licht zu modulieren, und das modulierte Licht abgebildet wird, um die Anzeige zu bilden, dadurch gekennzeichnet, daß die akusto-optische Zelle (23) eine Tellurdioxid (TeO₂)-Kristallzelle ist, in die die Schallwellen entlang der Richtung der langsamen Scherachse mittels eines Wandlers (13) eingekoppelt werden, in den ein die Anzeigeinformation tragendes elektrisches Eingangssignal eingespeist wird, wobei das besagte Eingangssignal eine 30 MHz nicht überschreitende Bandbreite und eine Trägerfrequenz von weniger als 75 MHz besitzt, und daß die Lichtquelle einen eigenpulsierten Laser (10) umfaßt, der pulsiert wird, um eine Folge von Laserlichtimpulsen der anzuzeigenden Wellenlänge zu erzeugen, die entsprechend der anzuzeigenden Information räumlich moduliert werden.

2. Anzeigesystem nach Anspruch 1, dadurch gekennzeichnet, daß die Laserlichtquelle (10) im Gleichtakt mit dem Eingangssignal pulsiert wird, sodaß aufeinanderfolgende von besagtem Eingangssignal getragene Informationsströme sequentiell abgebildet werden.

3. Anzeigesystem nach Anspruch 2, dadurch gekennzeichnet, daß der Laser (10) direkt vom Eingangssignal synchronisiert wird.

4. Anzeigesystem nach Anspruch 2 oder Anspruch 3, dadurch gekennzeichnet, daß die Laserimpulse von ausreichend kurzer Dauer sind, daß keine Informationsverwischung auftritt.

5. Anzeigesystem nach Anspruch 4, dadurch gekennzeichnet, daß jeder nachfolgende Informationsstrom eine Videozeile mit einer Anzahl von Auflösungselementen im Bereich 200 bis 400 umfaßt.

6. Anzeigesystem nach Anspruch 5, dadurch gekennzeichnet, daß die aktive zeitliche Länge der Videozeile annähernd 60 Mikrosekunden beträgt.

7. Anzeigesystem nach Anspruch 4 oder Anspruch 5 oder Anspruch 6, dadurch gekennzeichnet, daß die Laserimpulsdauer unterhalb von 50 Nanosekunden liegt.

8. Anzeigesystem nach einem beliebigen der Ansprüche 1 bis 7, gekennzeichnet durch optische Anzeigemittel (15, 16, 18) zur Abbildung der modulierten Lichtimpulse.

9. Anzeigesystem nach Anspruch 8, dadurch gekennzeichnet, daß das Anzeigemittel einen Vertikalablenkungsvorrichtung (18) zur vertikalen Ablenkung der aufeinanderfolgenden Videozeilen enthält.

10. Anzeigesystem nach Anspruch 9, dadurch gekennzeichnet, daß die Vertikalablenkungseinrichtung einen durch das Eingangssignal synchronisierten, rotierenden oder schwingenden Spiegel (18) zum Ermöglichen einer zwei-dimensionalen Anzeige umfaßt.

11. Anzeigesystem nach Anspruch 8 oder Anspruch 9 oder Anspruch 10, dadurch gekennzeichnet, daß eine modulierte Videoanzeige durch Fokussieren des Laserlichts durch eine von zwei kleinen Öffnungen erzeugt wird, die dazu dienen, entweder Licht der Ordnung Null (ungebeugt) oder der Ordnung Eins (gebeugt) hindurchzulassen.

12. Anzeigesystem nach Anspruch 11, dadurch gekennzeichnet, daß das Licht der ersten Ordnung relativ zum Licht der Ordnung Null in umgekehrtem Video, das heißt komplementärer Helligkeit, ist.

13. Anzeigesystem nach einem beliebigen der Ansprüche 1 bis 12, dadurch gekennzeichnet, daß der Laser (10) auf Gold-, Kupfer- und Strontiumdämpfen aufgebaut ist und pulsierte sichtbare Ausgangssignale auf 628 nm (rot) für den Golddampflaser, auf 510 nm (blau/grün) und 578 nm (gelb/orange) für den Kupferdampflaser und auf 430 nm für den Strontiumdampflaser abgibt.

14. Anzeigesystem nach einem der Ansprüche 1 bis 12, wobei die Betriebswellenlänge außerhalb des sichtbaren Bereiches und im Infrarot liegt.

15. Anzeigesystem nach einem der Ansprüche 1 bis 14, dadurch gekennzeichnet, daß eine Farbanzeige durch Verwendung eines pulsierten Lasers (10) bereitgestellt wird, der ein Doppelwellenlängenausgangssignal abgibt, von dem die einzelnen Wellenlängenanteile durch einen Trenner (30) getrennt werden, der sich stromauf von mindestens einer akusto-optischen Zelle befindet, die mit einem auf unterschiedlichen Mittenträgerfrequenzen beruhenden elektrischen Eingangssignal gespeist wird.

16. Anzeigesystem nach Anspruch 15, dadurch gekennzeichnet, daß zwei akusto-optische Zellen (12A bzw. 12B) jeweils die zwei vom Trenner (30) austretenden Wellenlängenanteile empfangen, daß die Zellen einzeln durch Eingangssignale aktiviert werden, die auf unterschiedlichen Mittenträgerfrequenzen beruhen, die für die zwei Wellenlängen optimiert sind, und daß die aus den Zellen austretenden modulierten Lichtstrahlen in einem Strahlkombinierer (32) kombiniert werden.

17. Anzeigesystem nach Anspruch 15, dadurch gekennzeichnet, daß eine einzelne akusto-optische Zelle (12C) die beiden aus dem Trenner (30) mit leicht unterschiedlichen Einfallwinkeln austretenden Wellenlängenanteile empfängt, und daß die Zelle durch ein Eingangssignal aktiviert wird, das die Summe zweier auf den unterschiedlichen Mittenträgerfrequenzen beruhender modulierter Träger umfaßt.

18. Anzeigesystem nach Anspruch 16 oder Anspruch 17, dadurch gekennzeichnet, daß das/die Eingangssignal(e) eine lineare Kombination von RGB-Farbsignalen umfaßt/umfassen.

**Revendications**

1. Système d'affichage destiné à afficher une information et dans lequel une source de lumière est utilisée pour éclairer une cellule acousto-optique activée par un signal d'entrée, qui transmet, à travers la cellule, des ondes acoustiques possédant une amplitude représentative de l'information devant être affichée de manière à moduler la lumière incidente, et l'image de la lumière modulée est reproduite pour former l'affichage, caractérisé en ce que la cellule acousto-optique (23) est une cellule constituée par du dioxyde de tellure cristallin (TeO$_2$), dans laquelle les ondes acoustiques sont dirigées, dans la direction de l'axe de cisaillement faible, au moyen d'un transducteur (13) alimenté par un signal électrique d'entrée portant l'information affichée, ledit signal d'entrée possédant une largeur de bande ne dépassant pas 30 MHz et une fréquence porteuse inférieure à 75 MHz, et en ce que la source de lumière comporte un laser (10) pulsé naturellement de manière à produire une séquence d'impulsions de lumière laser possédant la longueur d'onde devant être affichée et modulées spatialement conformément à l'information devant être affichée.

2. Système d'affichage selon la revendication 1, caractérisé en ce que la source de lumière laser (10) est pulsée en synchronisme avec le signal d'entrée de sorte que les images de flux successifs d'informations véhiculées par ledit signal d'entrée sont reproduites de façon séquentielle.

3. Système d'affichage selon la revendication 2, caractérisé en ce que le laser (10) est synchronisé directement à partir du signal d'entrée.

4. Système d'affichage selon la revendication 2 ou 3, caractérisé en ce que la durée des impulsions laser est suffisamment brève pour qu'il n'apparaisse aucune rémanence de l'information.

5. Système d'affichage selon la revendication 4, caractérisé en ce que chaque flux successif d'informations comporte une ligne vidéo possédant un certain nombre d'éléments de résolution, situés dans la gamme de 200 à 400.

6. Système d'affichage selon la revendication 5, caractérisé en ce que la durée active de la ligne vidéo est égale approximativement à 60 microsecondes.

7. Système d'affichage selon la revendication 4 ou 5 ou 6, caractérisé en ce que la durée des impulsions laser est inférieure à 50 nanosecondes.

8. Système selon l'une quelconque des revendications 1 à 7, caractérisé par des moyens d'affichage optiques (15, 16, 18) servant à former l'image des impulsions de lumière modulées.

9. Système d'affichage selon la revendication 8, caractérisé en ce que les moyens d'affichage incluent un dispositif (18) de balayage de trame servant à réaliser le balayage vertical des lignes vidéo successives.

10. Système d'affichage selon la revendication 9, caractérisé en ce que le dispositif de balayage de trame comporte un miroir rotatif ou oscillant (18) synchronisé par le signal d'entrée de manière à fournir un affichage bidimensionnel.

11. Système d'affichage selon la revendication 8, 9 ou 10, caractérisé en ce qu'un affichage vidéo modulé est produit par focalisation de la lumière laser à travers l'un de deux petits orifices, qui servent à transmettre soit une lumière d'ordre zéro (non diffractée), soit une lumière du premier ordre (diffractée).

12. Système selon la revendication 11, caractérisé en ce que la lumière du premier ordre est inverse, du point de vue vidéo, de la lumière d'ordre zéro, c'est-à-dire qu'elle possède une luminosité complémentaire.

13. Système d'affichage selon l'une quelconque des revendications 1 à 12, caractérisé en ce que le laser (10) est formé à base de vapeurs d'or, de cuivre et de strontium, ce qui fournit des signaux de sortie pulsés visibles à 628 nm (rouge) pour le laser à vapeur d'or, à 510 nm (bleu/vert) et à 578 nm (jaune/orange) pour le laser à vapeur de cuivre et à 430 nm pour le laser à vapeur de strontium.

14. Système d'affichage selon l'une quelconque des revendications 1 à 12, dans lequel la longueur d'onde de fonctionnement est à l'extérieur du spectre visible et se situe dans l'infrarouge.

15. Système d'affichage selon l'une quelconque des revendications 1 à 14, caractérisé en ce qu'on obtient un affichage en couleurs grâce à l'utilisation d'un laser pulsé (10) fournissant un signal de sortie à deux longueurs d'onde, les composantes individuelles des longueurs d'onde étant séparées par un séparateur (30) en amont d'au moins une cellule acousto-optique alimentée par un signal électrique d'entrée, sur la base de fréquences porteuses centrales différentes.

16. Système d'affichage selon la revendication 15, caractérisé en ce que deux cellules acousto-optiques (12A, 12B) reçoivent respectivement les deux composantes des longueurs d'onde sortant du séparateur (30), en ce que les cellules sont activées individuellement par des signaux d'entrée basés sur des fréquences porteuses centrales différentes optimisées pour les deux longueurs d'onde, et en ce que les faisceaux de lumière modulés sortant des cellules sont combinés dans au moins un combinateur de faisceaux (32).

17. Système d'affichage selon la revendication 15, caractérisé en ce qu'une seule cellule acousto-optique (12C) reçoit les deux composantes des longueurs d'onde sortant du séparateur (30) sous des angles d'incidence légèrement différents, et en ce que la cellule est activée par un signal d'entrée, qui inclut la somme de deux porteuses modulées basées sur des fréquences porteuses centrales différentes.

18. Système d'affichage selon la revendication 16 ou 17, caractérisé en ce que tous les signaux d'entrée incluent une combinaison linéaire de signaux chromatiques RGB.

Fig.1

Fig.2

EP 0 157 791 B1

Fig.3